# EUROPEAN PATENT SPECIFICATION

(11) **EP 2 660 945 B1**
(45) Date of publication and mention of the grant of the patent: **01.02.2017**
(21) Application number: 11853634.1
(22) Date of filing: 07.12.2011
(51) Int. Cl.: H02J 7/00, H01M 10/44, H01M 10/48

(54) **RECHARGING DEVICE**
WIEDERAUFLADEVORRICHTUNG
DISPOSITIF DE RECHARGE

(30) Priority: 28.12.2010 JP 2010293428
(43) Date of publication of application: 06.11.2013
(73) Proprietor: Makita Corporation, Anjo-shi, Aichi 446-8502 (JP)
(72) Inventor: ISHIKAWA, Yoshihiro, Anjo-shi Aichi 446-8502 (JP); OKABAYASHI, Hisakazu, Anjo-shi Aichi 446-8502 (JP); SAKAI, Mamoru, Anjo-shi Aichi 446-8502 (JP); KOBAYASHI, Makihiro, Anjo-shi Aichi 446-8502 (JP)
(74) Representative: Kramer Barske Schmidtchen Patentanwälte PartG mbB
(86) International application number: PCT/JP2011/078312
(87) International publication number: WO 2012/090664

(56) References cited:
- EP-A2- 1 780 867
- EP-A2- 2 161 809
- JP-A- 11 098 701
- JP-A- 2001 069 671
- JP-A- 2008 067 522
- JP-A- 2009 178 014
- JP-A- 2010 058 244
- JP-A- 2010 093 925

## Description

### CROSS-REFERENCE TO RELATED APPLICATIONS

This international application claims the benefit of Japanese Patent Application No. 2010-293428 filed December 28, 2010 in the Japan Patent Office.

### TECHNICAL FIELD

The present invention relates to a battery charging apparatus including a function for confirming a normal operation of a battery protection circuit when charging.

### BACKGROUND ART

Conventionally, a charging apparatus is provided with a controller that obtains various information, such as temperature, from a battery and controls charging based upon the obtained information. The charging apparatus is sometimes further provided with a protection circuit in case of failure of normal charging control due to malfunction of the controller. The protection circuit is different from the controller and stops charging current without involving the controller and based upon the information obtained from the battery.

This protection circuit can force charging to discontinue also when the controller malfunctions and can not command to discontinue charging (see, for example, Patent Document 1).

A charging apparatus according to the preamble of claim 1 is disclosed in EP 1 780 867 A2.

### PRIOR ART DOCUMENTS

### PATENT DOCUMENTS

Patent Document 1: Japanese Unexamined Patent Application Publication No. 2010-93925

### SUMMARY OF THE INVENTION

### PROBLEMS TO BE SOLVED BY THE INVENTION

However, even with the use of the above-described protection circuit, if by any chance the controller malfunctions in the event of the presence of trouble such as wiring disconnection somewhere between the protection circuit and a connector connected to the battery, charging of the battery may continue without stopping, which is likely to lead to battery malfunction.

The present invention provides a charging apparatus that is highly reliable when charging.

### MEANS FOR SOLVING THE PROBLEMS

An invention made to solve the problem described in the "PROBLEMS TO BE SOLVED BY THE INVENTION" above is a charging apparatus for charging a battery for an electric power tool. The charging apparatus is provided with a control unit, a charging detecting unit, a charging discontinuing unit, and a diagnosing unit.

The control unit obtains information indicating a status of the battery from the battery and controls permitting or prohibiting charging the battery depending on whether or not the obtained information satisfies a predetermined first condition. The charging detecting unit detects a charging current to the battery.

The charging discontinuing unit obtains the information indicating the status of the battery from the battery and discontinues charging the battery independently of the control by the control unit to permit or prohibit charging when the obtained information satisfies a predetermined second condition.

The diagnosing unit inputs diagnostic information satisfying the second condition to the charging discontinuing unit in addition to the information indicating the status of the battery or as a replacement for the information indicating the status of the battery based upon information entered from the control unit.

The control unit discontinues charging the battery via the charging discontinuing unit by outputting the diagnostic information satisfying the second condition to the diagnosing unit while permitting charging the battery, and subsequently the control unit obtains from the charging detecting unit whether or not the battery is being charged, wherein the control unit initiates charging the battery by stopping outputting the diagnostic information satisfying the second condition to the diagnosing unit when the battery is not being charged and prohibits charging the battery when the battery is being charged.

With this type of charging apparatus, it is possible to enhance reliability when charging the battery. It will be described below.

Diagnostic information satisfying the second condition is inputted to the charging discontinuing unit in addition to, or as a replacement for, the information indicating the status of the battery when charging the battery is permitted.

Here, the "predetermined second condition" represents a condition to prohibit charging the battery, for example, such as a voltage value exceeding an upper limit value of a charging voltage for the battery, a temperature value exceeding a temperature of the battery at the full-charge status, information indicating malfunction of the battery, and so on.

Accordingly, when the charging apparatus, especially the charging discontinuing unit, is normal, the charging discontinuing unit is inputted with the predetermined diagnostic information satisfying the second condition in addition to, or as a replacement for, the information indicating the status of the battery in a state where charging to the battery has been permitted, wherein charging the battery is not performed.

Therefore, it is obtained from the charging detecting unit whether or not the battery is being charged in a situation where the predetermined diagnostic information satisfying the second condition is inputted to the charging discontinuing unit. If the battery is not being charged, the charging apparatus is normal. If the battery is being charged, the charging apparatus is confirmed to be abnormal.

Thus, when the battery is not being charged, charging the battery is initiated, whereas, when the battery is being charged, charging the battery is prohibited. Accordingly, charging the battery is not performed in the event that the charging apparatus, especially the discontinuing charging, malfunctions, thereby enabling enhanced reliability of the charging apparatus when charging the battery.

Here, the "information indicating the status of the battery" represents information concerning a charging amount of the battery, for example, such as temperature of the battery, charging voltage of the battery, information indicating whether the battery is chargeable, for example, such as whether the battery is normal or abnormal, or the like.

Further, the "predetermined first condition" represents the upper limit value of the temperature at which the battery is chargeable and varies depending on a type of the battery to be charged. The above-described "predetermined second condition" is also a value varying depending on a type of the battery to be charged.

Here, various features may be referred to as the information indicating the status of the battery that varies depending on a type of the battery to be charged. For example, the battery temperature rises as the battery is charged and becomes the upper limit value when the battery reaches the full-charge status.

According to a second aspect of the present invention, it is preferable to use a battery temperature as the information indicating the status of the battery, to refer to the predetermined first condition as the upper limit value of the temperature at which the battery is chargeable, and to refer to the predetermined second condition as a temperature higher than a temperature obtained by adding a specified value to the upper limit value of the temperature at which the battery is chargeable.

In this way, it is possible to charge until the battery reaches the full-charge status and also to perform a self-diagnosis at a temperature (predetermined second condition), the temperature exceeding the upper limit indicating that the battery is at the full-charge status (predetermined first condition), thereby reliably protecting the charging apparatus.

Specifically, temperature is appropriate as information indicating a charging status of a battery, such as NiMH battery, NiCd battery, so that temperature is appropriate to protect the charging apparatus when charging the battery such as NiMH battery, NiCd battery.

In addition, a charging voltage for the battery rises as the battery is charged and becomes an upper limit value when the battery reaches the full-charge status. Thus, according to a third aspect of the present invention, it is preferable to use a charging voltage for the battery as the information indicating the status of the battery, to refer to the predetermined first condition as the upper limit value of a charging voltage at which the battery is chargeable, and to refer to the predetermined second condition as a voltage higher than a voltage obtained by adding a specified value to the upper limit value of the charging voltage at which the battery is chargeable.

In this way, it is possible to charge the battery to the full-charge status and to perform the self-diagnosis at a voltage (predetermined second condition), the voltage exceeding the upper limit value of a full-charge voltage (predetermined first condition), thereby reliably protecting the charging apparatus.

Especially, charging voltage is appropriate as information indicating a charging status of an Li ion battery, so that charging voltage is appropriate to protect the charging apparatus when charging the Li ion battery.

In addition, according to a fourth aspect of the present invention, digital data is used as the information indicating the status of the battery, which indicates "permit" pr "discontinue" charging the battery. It is preferable to refer to the predetermined first condition and the predetermined second condition both as digital data indicating discontinuing the battery charging.

In this way, it is possible to control charging, and to perform the self diagnosis, by use of information indicating normality or abnormality of the battery, besides the usage of temperature or charging voltage indicating the charging status of the battery as the digital data.

Accordingly, charging is not initiated at emergency, for example when the battery malfunctions, in addition to when battery temperature or charging voltage is referred to, thereby enabling to reliably protect the charging apparatus.

The self-diagnosis by the charging apparatus is considered to be performed at a variety of timings. If the self-diagnosis is performed prior to charging the battery, it is preferable to be provided with a battery-insert detecting unit that detects the insertion of the battery, wherein the self-diagnostic process is performed by the control unit after detecting the insertion of the battery by the battery-insert detecting unit and prior to initiating charging the battery. This corresponds to a fifth aspect of the present invention.

Accordingly, the self-diagnosis by the charging apparatus is performed prior to initiating battery charging, so that battery charging is performed safely.

Further, according to a sixth aspect of the present invention, the charging apparatus further includes a battery-insert detecting unit that detects an insertion of the battery. It is preferable that the control unit performs the self-diagnostic process when a predetermined self-diagnosis starting condition is satisfied after detecting the insertion of the battery by the battery-insert detecting unit and after initiating charging.

Here, the "predetermined self-diagnosis starting condition is satisfied" means, for example, that a predetermined period of time has elapsed since initiating charging, that a charging amount of the battery has reached a predetermined value, or the like. As described above, the charging amount may be detected based upon the battery temperature or the battery charging voltage, or may be obtained by the control unit that accumulates charging current by use of the charging detecting unit.

In this case, the self diagnosis for the charging apparatus may be performed while charging the battery. Therefore, even when circuit failure occurs while charging, charging is reliably stopped, thereby enabling enhanced reliability.

According to a seventh aspect of the present invention, the control unit initiates charging the battery by stopping the diagnostic information satisfying the second condition to the diagnosing unit and outputs, to the external, information indicating that the charging discontinuing unit is normal when the charging detecting unit detects the absence of charging the battery, and the control unit prohibits charging the battery and outputs, to the external, information indicating that the charging discontinuing unit is abnormal when the charging detecting unit detects the presence of charging the battery.

In this case, the information indicating whether the charging discontinuing unit of the charging apparatus is normal or abnormal is outputted to the exterior. By displaying or acoustically outputting the normal/abnormal information, users are announced whether it is normal or abnormal, which provides a handy and easy-to-use charging apparatus.

### BRIEF DESCRIPTION OF THE DRAWINGS

FIG. 1 is a circuit diagram schematically illustrating a circuit configuration of a charging apparatus.
FIG. 2 is a circuit diagram illustrating a charging-prohibition detecting circuit and a self-diagnostic circuit when a battery temperature is used as information indicating the charging status of the battery.
FIG. 3 is a flowchart for explaining a series of self-diagnostic processes implemented by a control unit.
FIG. 4 is a circuit diagram schematically illustrating a circuit configuration of a charging apparatus according to a second embodiment.
FIG. 5 is a circuit diagram illustrating a charging-prohibition detecting circuit and a self-diagnostic circuit when a charging voltage for the battery is used as the information indicating the charging status of the battery according to the second embodiment.
FIG. 6 is a circuit diagram schematically illustrating a circuit configuration of a charging apparatus according to a third embodiment.
FIG. 7 is a circuit diagram illustrating a charging-prohibition detecting circuit and a self-diagnostic circuit when digital data from the battery is used as the information indicating the charging status of the battery according to the third embodiment.

### EXPLANATION OF REFERENCE NUMERALS

1, 2, 3...charging apparatus, 5...battery, 10...control unit, 20...current detecting unit, 22...current detecting element, 30...charging-prohibition detecting circuit, 31...comparator, 31a...minus terminal, 31b...plus terminal, 32...comparator, 32a...minus terminal, 32b...plus terminal, 33 , 34 , 35 , 36 , 37...resistor, 40...self-diagnostic circuit, 41...transistor, 42 , 43 , 44...resistor, 50...charging-start switch, 60...voltage detecting unit, 70...PWM output setting unit, 72...PWM-control IC power source, 74...PWM-control IC, 80...main converter, 82...power source terminal, 84...noise filter, 86...rectifier smoothing circuit, 90...LED, 100...communication terminal, 102...temperature input terminal, 131...decode IC, 132...flip-flop, 133...resistor, 134...transistor

### MODE FOR CARRYING OUT THE INVENTION

Embodiments which the present invention is applied to will be explained below with reference to the drawings. The invention will be further illustrated with reference to the attached drawings, which show preferred embodiments according to the invention. It will be understood that the present invention is not in any way restricted to the embodiments set forth below and various modifications are made within the scope of the present invention.

### [First Embodiment]

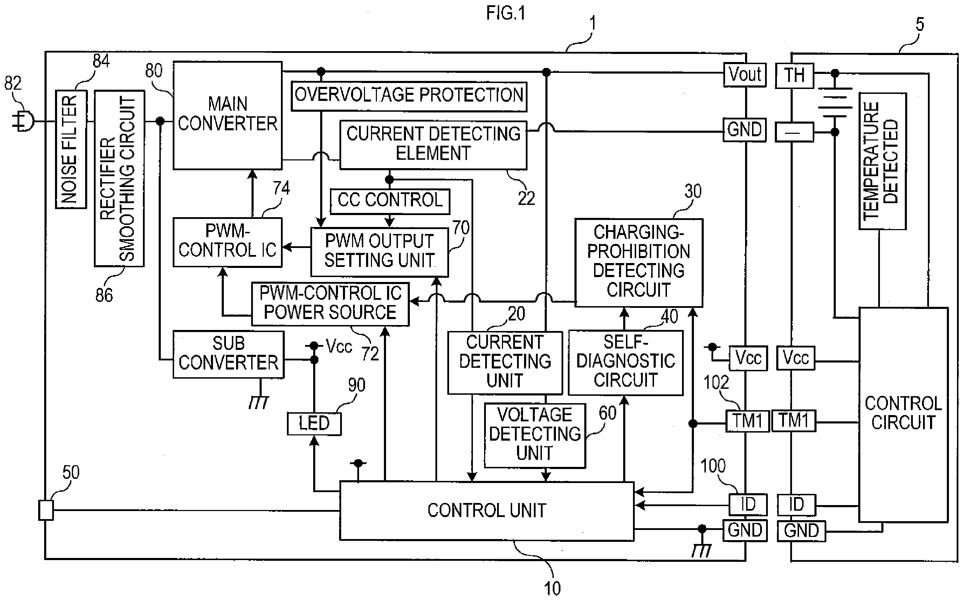

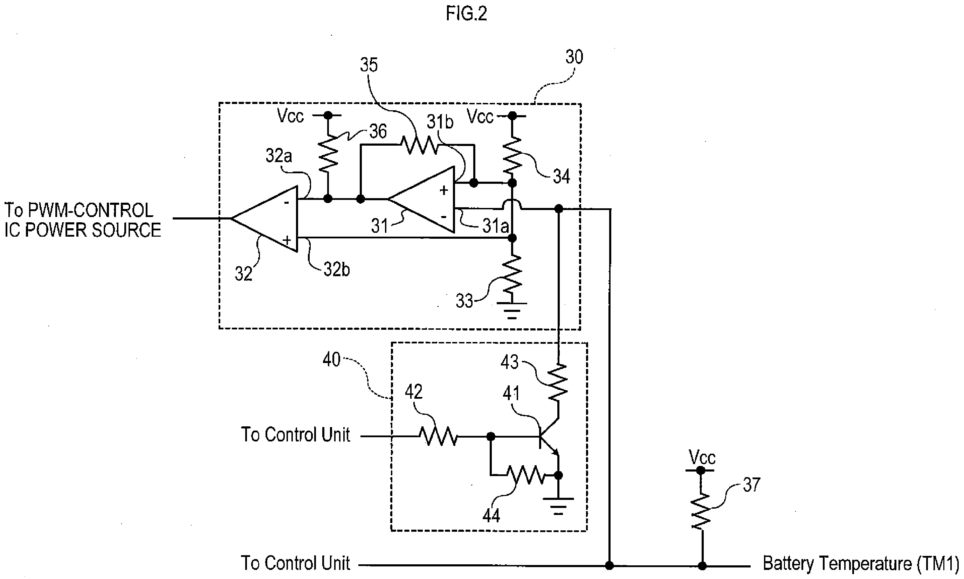

FIG. 1 is a circuit diagram schematically illustrating a circuit configuration of a charging apparatus 1 which the present invention is applied to. FIG. 2 is a circuit diagram illustrating a charging-prohibition detecting circuit 30 and a self-diagnostic circuit 40 when a temperature of a battery 5 is used as information indicating the charging status of the battery 5.

The charging apparatus 1 is the charging apparatus 1 for charging the battery 5 for an electric power tool, and, as illustrated in FIG. 1, includes: a control unit 10; a current detecting unit 20; a current detecting element 22; the charging-prohibition detecting circuit 30; the self-diagnostic circuit 40; a voltage detecting unit 60; a PWM output setting unit 70; a PWM-control IC power source 72; a PWM-control IC 74; a main converter 80; a power source terminal 82; a noise filter 84; a rectifier smoothing circuit 86; and an LED 90.

The control unit 10 is configured with a not-illustrated CPU, ROM, RAM, and I/O. The control unit 10 obtains from the battery 5 information indicating the status of the battery 5 and controls permitting or prohibiting charging the battery 5 depending on whether or not the obtained information satisfies a predetermined first condition.

According to the first embodiment, the "information indicating the status of the battery 5" is a temperature of the battery 5. The "predetermined first condition" is an upper limit value of a temperature at which the battery is chargeable and varies depending on the type of the battery 5 that is a subject to be charged.

When the status of the battery 5 approaches a full-charge status as charging the battery 5 progresses, the temperature of the battery 5 rises, and on the other hand a voltage outputted from a temperature sensor drops. The current detecting unit 20 serves to detect whether or not the battery 5 is being charged. The current detecting unit 20 detects a charging current outputted to the battery 5 from the charging apparatus 1 by measuring an output voltage of the current detecting element 22 arranged in series on a GND line among two output lines of the main converter 80. The current detecting element 22 may be, for example, a shunt resistor configured to output voltage by converting current to voltage.

The charging-prohibition detecting circuit 30 obtains the information indicating the status of the battery 5 (temperature) from the battery 5 and discontinues charging the battery 5 independently of the control by the control unit 10 to permit or prohibit charging when the obtained temperature satisfies a predetermined second condition.

According to the first embodiment, the "predetermined second condition" is a temperature higher than a temperature obtained by adding a specified value to the upper limit value of the temperature at which the battery is chargeable and varies depending on the type of the battery 5 that is a subject to be charged. Here, the specified value is a value not less than zero. When a battery charger operates normally, the control unit 10 detects a full-charge of the battery 5 and then discontinues charging the battery 5. Therefore, the charging-prohibition detecting circuit 30 is provided with a threshold value set higher than the temperature.

Specifically, as illustrated in FIG. 1, the charging-prohibition detecting circuit 30 is inputted, from a temperature input terminal 102, with a voltage representing a temperature of the battery 5 as the information indicating the status of the battery 5. When the inputted voltage is not greater than a voltage indicating a full-charge status (predetermined second condition), the charging-prohibition detecting circuit 30 outputs a charging prohibition signal to the PWM-control IC power source 72.

More specifically, as illustrated in FIG. 2, the charging-prohibition detecting circuit 30 is configured with two comparators 31, 32 and four resistors 33, 34, 35, and 36.

The comparator 31 is inputted, at a minus terminal 31a, with an output voltage of the temperature sensor from the temperature input terminal 102. The comparator 31 is inputted, at a plus terminal 31b, with a reference voltage. The reference voltage corresponds to a partial voltage obtained by dividing a power-supply voltage Vcc by the resistor 33 and the resistor 34, and further corresponds to a temperature obtained by adding a specified value to a temperature of the battery 5 at the full-charge status, i.e., a voltage for the predetermined second condition.

Accordingly, when the output voltage of the temperature sensor is higher than the reference voltage, i.e., when the temperature of the battery 5 is low, the output of the comparator 31 is a low level (Lo).

On the other hand, if the battery 5 is further charged from the full-charge status due to circuit malfunction or the like, the output voltage of the temperature sensor becomes further lower than the reference voltage, whereby the output of the comparator 31 becomes high impedance. Thus, the comparator 32 is inputted, at a minus terminal 32a, with a high-level signal (Hi) via the resistor 36.

The comparator 32 is inputted, at a plus terminal 32b, with a reference voltage being the same as the reference voltage inputted into the plus terminal 31b of the comparator 31b.

The comparator 32 is inputted, at the minus terminal 32a, with the output voltage of the comparator 31. That is, when the output voltage of the temperature sensor is higher than the reference voltage (the temperature of the battery 5 is low), the comparator 32 is inputted, at the minus terminal 32a, with a low-level signal (Lo), whereby the output of the comparator 32 becomes high impedance.

To the contrary, when the output voltage of the temperature sensor is lower than the reference voltage (the temperature of the battery 5 is high), the comparator 32 is inputted, at the minus terminal 32a, with the high-level signal (Hi), wherein the output of the comparator 32 becomes a low level (Lo).

The self-diagnostic circuit 40 is a circuit that inputs, to the charging-prohibition detecting circuit 30, diagnostic information satisfying the predetermined second condition (voltage lower than the reference voltage) based upon information entered from the control unit 10 in addition to the information indicating the status of the battery 5.

Specifically, the self-diagnostic circuit 40 is configured with a transistor 41 and three resistors 42, 43, and 44. The transistor 41 is a bipolar type NPN transistor, and a base of the transistor 41 is connected to the control unit 10 via the resistor 42.

A collector of the transistor 41 is connected to the minus terminal 31a of the comparator 31 of the charging-prohibition detecting circuit 30 via the resistor 43, wherein both the diagnostic information outputted from the collector and the output of the temperature sensor of the battery 5 are inputted to the minus terminal 31a. An emitter of the transistor 41 is connected to a ground. The resistor 44 is connected between the base and the emitter.

When the self-diagnostic circuit 40 is inputted with a high level signal (Hi) from the control unit 10, the collector and the emitter are electrically connected to each other. In this case, the input of the minus terminal 31a of the comparator 31 of the charging-prohibition detecting circuit 30 becomes lower compared to when the transistor 41 is at an OFF state.

That is, the same situation arises as that in which the output voltage of the temperature sensor of the battery 5 drops. In other words, the temperature of the battery 5 indicates a temperature added with the specified value into the temperature of the battery 5 at the full-charge status. This means the presence of an input satisfying the predetermined second condition.

To the contrary, when the self-diagnostic circuit 40 is inputted with a low level signal (Lo) from the control unit 10, the collector and the emitter are electrically disconnected from each other. In this case, the minus terminal 31a is inputted with a signal based upon a partial voltage between a pull-up resistor 37 and the temperature sensor in the battery (thermistor, etc.), whereby charging is permitted.

The control unit 10 performs the self-diagnostic process described by (A)-(G) as follow:
(A) performs the self-diagnostic process with the battery 5 inserted and prior to initiating charging;
(B) stops charging the battery 5 by way of the charging-prohibition detecting circuit 30 by outputting a diagnostic information satisfying the second condition to the self-diagnostic circuit 40 while permitting charging the battery 5;
(C) then, obtains a charging current from the current detecting unit 20;
(D) initiates charging the battery 5 by stopping the diagnostic information satisfying the second condition to the self-diagnostic circuit 40 when the charging current obtained from the current detecting unit 20 is less than a specified value;
(E) outputs, to the external, information indicating that the charging-prohibition detecting circuit 30 is normal;
(F) prohibits charging the battery 5 when the charging current obtained from the current detecting unit 20 is not less than a specified value; and
(G) outputs, to the external, information indicating that the charging-prohibition detecting circuit 30 is abnormal.

The voltage detecting unit 60 is a voltmeter that is connected in parallel to the output line of the main converter 80. The voltage detecting unit 60 measures a charging voltage for charging the battery 5 (output voltage of the main converter 80) and outputs the measured charging voltage to the control unit 10.

The PWM output setting unit 70 sets a duty ratio or the like for the PWM-control IC 74 based upon a command from the control unit 10.

The PWM-control IC power source 72 receives a charging signal from the control unit 10 and turns on a power source for driving the PWM-control IC 74 (when charging) or receives a charging-prohibition signal from the charging-prohibition detecting circuit 30 and turns off the power source for driving the PWM-control IC 74 (when prohibiting charging).

The PWM-control IC 74 is an IC for controlling a PWM (stands for pulse width modulation) and receives a command from the PWM output setting unit 70 to alter the PWM duty ratio.

The main converter 80 is a converter that converts a power-supply voltage, which was inputted from the power source element 82 and then rectified to DC by the rectifier smoothing circuit 86 via the noise filter 84, into a DC charging voltage for the battery 5.

The LED 90 is an announcing device that indicates normal and abnormal statuses of the charging apparatus 1. When the charging apparatus 1 is normal, the LED 90 emits a green or red light, whereas when abnormal, it emits red and green lights alternately.

### (Operation of the charging apparatus 1)

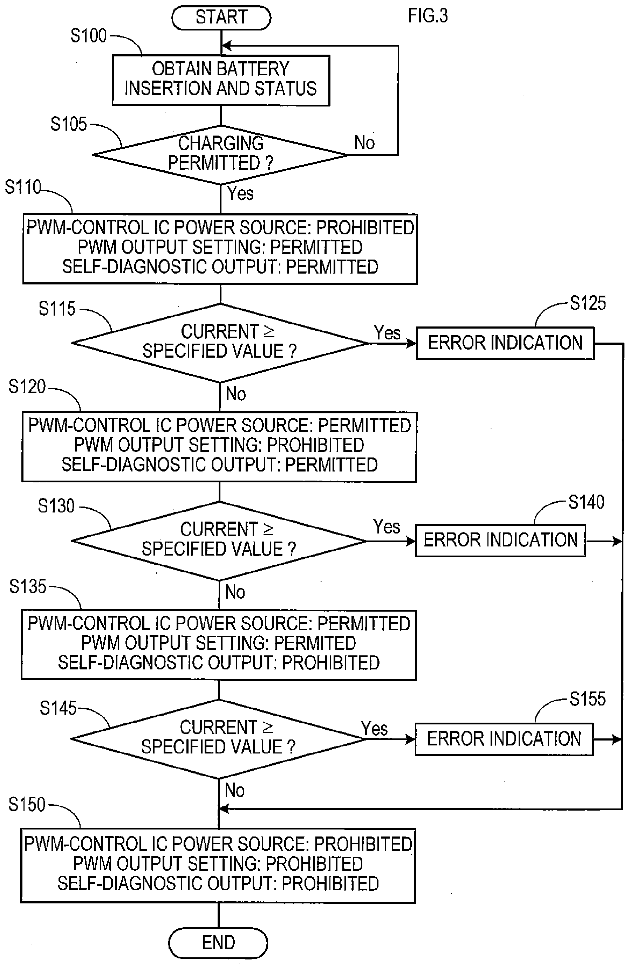

A series of self-diagnostic processes performed by the control unit 10 will be explained below with reference to FIG. 3. FIG. 3 is a flowchart for explaining a flow of the self-diagnostic process.

The self-diagnostic processes are stored as a program in the ROM. The CPU reads out the program from the ROM and initiates performance at the same time as when the charging apparatus 1 is powered on.

Once the processes are initiated, as illustrated in FIG. 3, the CPU obtains the battery 5 inserted and status of the battery 5 at S100.

At S105 following S100, the CPU determines whether the status of the battery 5 obtained at S100 is "Charging Permitted". When the CPU determines that the status of the battery 5 is "Charging Permitted" (S105: Yes), the process proceeds to S110. And when the CPU determines that the status of the battery 5 is "Charging Prohibited" (S105: No), the process returns to S100, wherein a stand-by mode continues until the charging is permitted with the battery 5 inserted.

At S110, the CPU prohibits an output to the PWM-control IC power source 72, permits an output to the PWM output setting unit 70, and permits an output to the self-diagnostic circuit 40 (Lo level).

At S115 following S110, the CPU determines whether the charging current is not less than the specified value. That is, the CPU obtains, from the current detecting unit 20, a charging current value and determines whether the obtained charging current value is not less than the specified value.

When the CPU determines that the charging current is less than the specified value (S115: No), the process proceeds to S120. When the CPU determines that the charging current is equal to or greater than the specified value (S115: Yes), the process proceeds to S125.

Here, the "specified value" is a significant current value to determine whether the battery 5 is being charged and is preferably determined based upon the type, or a noise level, of the battery 5, and so on.

At S120, the CPU permits an output to the PWM-control IC power source 72, prohibits an output to the PWM output setting unit 70, and permits an output to the self-diagnostic circuit 40 (Lo level).

At S125, the CPU allows for error indication. Specifically, the CPU controls the LED 90 to emit the red and green lights alternately for error indication, and the process proceeds to S150.

At S130, the CPU determines whether the charging current is not less than the specified value. When the CPU determines that the charging current is less than the specified value (S130: No), the process proceeds to S135. When the CPU determines that the charging current is equal to or greater than the specified value (S130: Yes), the process proceeds to S140.

At S135, the CPU permits an output to the PWM-control IC power source 72, permits an output to the PWM output setting unit 70, and prohibits an output to the self-diagnostic circuit 40 (Hi level).

At S140, the CPU allows for error indication. Specifically, the CPU controls the LED 90 to emit the red and green lights alternately for error indication, and the process proceeds to S150.

At S145, the CPU determines whether the charging current is not less than the specified value. When the CPU determines that the charging current is less than the specified value (S145: No), the process proceeds to S150. When the CPU determines that the charging current is equal to or greater than the specified value (S145: Yes), the process proceeds to S155.

At S155, the CPU allows for error indication. Specifically, the CPU controls the LED 90 to emit the red and green lights alternately for error indication, and the process proceeds to S150.

At S150, the CPU prohibits an output to the PWM-control IC power source 72, prohibits an output to the PWM output setting unit 70, and prohibits an output to the self-diagnostic circuit 40 (Hi level). The series of processes is then terminated.

After terminating the series of processes at S150, charging the battery 5 is initiated by the charging apparatus 1. However, in the event that the error indications are implemented at S125, S140, and S155, the battery charging is not initiated. The CPU notifies a user of that the charging apparatus 1 is abnormal, by continuing the error indication until the battery 5 is detached.

### (Characteristics of the charging apparatus 1)

In the above-described charging apparatus 1, the charging-prohibition detecting circuit 30 is inputted not only with a temperature of the battery 5 but also with a temperature higher than a temperature obtained by adding the specified value to the temperature at the full-charge status (predetermined second condition) under the situation where charging the battery 5 is permitted.

At this point, the current detecting unit 20 detects the presence or absence of the battery charging. When the battery charging is not detected, the charging apparatus 1 is confirmed normal. When the battery charging is detected, the detection means the presence of the battery charging, wherein the charging apparatus 1 is confirmed abnormal.

Accordingly, charging of the battery 5 is not performed with the charging apparatus 1, especially charging-prohibition detecting circuit 30, malfunctioning, by initiating charging the battery 5 in the event that the battery is not being charged and by prohibiting charging the battery 5 in the event that the battery 5 is being charged, thereby enabling enhanced reliability of the charging apparatus 1 when charging the battery 5.

A temperature of the battery 5 is employed as the information indicating the status of the battery 5. The predetermined first condition is referred to as the upper limit value of a temperature at which the battery is chargeable. The predetermined second condition is referred to as the temperature higher than a temperature obtained by adding the specified value to the upper limit value of a temperature at which the battery is chargeable.

As described above, the battery 5 can be charged up to the full-charge status. Further, a self-diagnosis is performed when the temperature of the battery 5 exceeds the temperature (predetermined second condition) obtained by adding the specified value to the upper limit value indicating the full-charge status (predetermined first condition), wherein the charging apparatus 1 is reliably protected.

Especially, temperature is appropriate as information indicating a charging status of a battery, such as NiMH battery, NiCd battery, so that temperature is appropriate to protect the charging apparatus 1 when charging the battery such as NiMH battery, NiCd battery.

Further, the LED 90 serves to indicate whether the charging-prohibition detecting circuit 30 is normal or abnormal. Users can confirm whether the status of the charging apparatus 1 is normal or abnormal. Therefore, the charging apparatus 1 is handy and easy to use.

### [Second Embodiment]

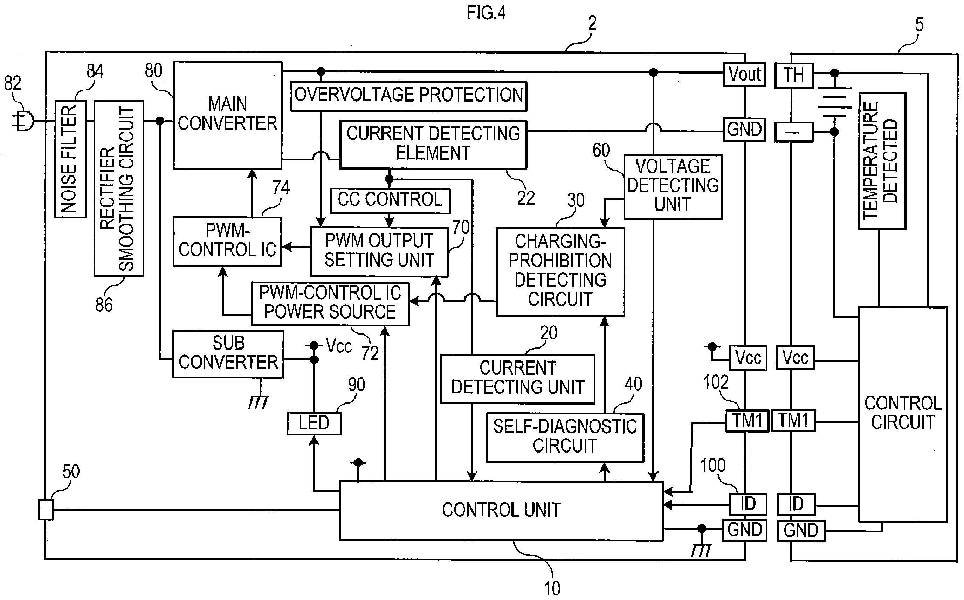

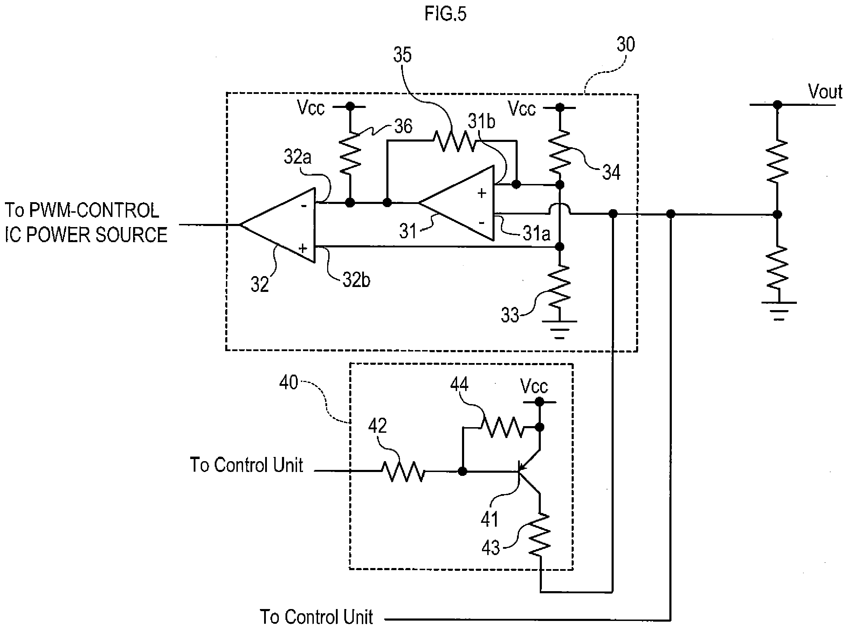

A second embodiment of the present invention will be described next with reference to FIG. 4 and FIG. 5. In the second embodiment, an input to the charging-prohibition detecting circuit 30 is a charging voltage for the battery 5 entered from the voltage detecting unit 60 instead of the output voltage of the temperature sensor from the temperature input terminal 102, according to the charging apparatus 1 of the first embodiment.

FIG. 4 is a circuit diagram schematically illustrating a circuit configuration of a charging apparatus according to the second embodiment. FIG. 5 is a circuit diagram illustrating a charging-prohibition detecting circuit 30 and a self-diagnostic circuit 40 when a charging voltage for the battery 5 is used as information indicating the charging status of the battery 5 according to the second embodiment.

The configuration of a charging apparatus 2 of the second embodiment is similar to the configuration of the charging apparatus 1 of the first embodiment. Therefore, identical reference numerals will be used for identical components, and the explanation thereof will be omitted.

As illustrated in FIG. 4, the charging apparatus 2 has a circuit configuration in which a charging voltage detected by the voltage detecting unit 60 is inputted into the charging-prohibition detecting circuit 30.

The voltage detecting unit 60 is a voltmeter for measuring a voltage (charging voltage) applied to a charging terminal of the battery 5 when charging the battery 5. The voltage detecting unit 60 outputs the measured charging voltage to the charging-prohibition detecting circuit 30 and the control unit 10.

The charging-prohibition detecting circuit 30 is inputted with the charging voltage measured by the voltage detecting unit 60 as the information indicating the status of the battery 5.

According to the second embodiment, the "predetermined second condition" is a voltage higher than a voltage obtained by adding a specified value to an upper limit value of a charging voltage of the battery 5 and varies depending on the type of the battery 5 that is subject to be charged.

Specifically, as illustrated in FIG. 4, the charging-prohibition detecting circuit 30 outputs a charging prohibition signal to the PWM-control IC when the charging-prohibition detecting circuit 30 is inputted with a charging voltage for the battery 5 and the inputted voltage is not less than a voltage obtained by adding the specified value to a charging voltage indicating the full-charge status (predetermined second condition).

More specifically, the charging-prohibition detecting circuit 30 is configured in the same manner as the charging-prohibition detecting circuit 30 of the first embodiment. However, as illustrated in FIG. 5, the minus terminal 31a of the comparator 31 is not the output voltage from the temperature sensor but a charging voltage.

Accordingly, when the charging voltage is lower than the reference voltage, the output of the comparator 31 becomes high impedance. When the charging voltage is higher than the reference voltage, the output of the comparator 31 is a low level (Lo).

A transistor 41 of a self-diagnostic circuit 40 is a bipolar type PNP transistor. The transistor 41 is configured with a base connected to a control unit 10 via a resistor 42, an emitter connected to a power source Vcc, and a collector connected to the minus terminal 31a of the comparator 31 of the charging-prohibition detecting circuit 30 via a resistor 43. Both the diagnostic information outputted from the collector and the charging voltage from the voltage detecting unit 60 are inputted to the minus terminal 31a. The emitter and the base are connected to each other via a resistor 44.

When the self-diagnostic circuit 40 is inputted with a low level voltage (Lo) from the control unit 10, the collector and the emitter are electrically conducted each other. In this case, the input of the minus terminal 31a of the comparator 31 of the charging-prohibition detecting circuit 30 becomes higher compared to when the transistor 41 is at an OFF state.

It then comes to the situation where the charging voltage for the battery 5 becomes higher than a voltage obtained by adding a specified value to a voltage at the full-charge status. This means the presence of an input satisfying the predetermined second condition. The above-described charging apparatus 2 operates in the same manner as the charging apparatus 1 of the first embodiment.

### (Characteristics of the charging apparatus 2)

In the above-described charging apparatus 2, a charging voltage is used as the information indicating the status of the battery 5. The predetermined first condition is referred to as the upper limit value of a charging voltage at which the battery is chargeable. The predetermined second condition is referred to as a voltage higher than a voltage obtained by adding the specified value to the upper limit value of the charging voltage at which the battery is chargeable.

Here, as charging the battery 5 progresses, the charging voltage rises. When the battery 5 comes to the full-charge status, the charging voltage reaches the upper limit value. Therefore, the battery 5 can be charged up to the full-charge status. Further, a self-diagnosis is performed when the charging voltage of the battery 5 exceeds a voltage (predetermined second condition), the voltage obtained by adding the specified value to the upper limit value (predetermined first condition), wherein the charging apparatus 2 is reliably protected.

Especially, charging voltage is appropriate as information indicating a charging status of a Li ion battery 5, so that charging voltage is appropriate to protect the charging apparatus 2 when charging the Li ion battery 5.

### [Third embodiment]

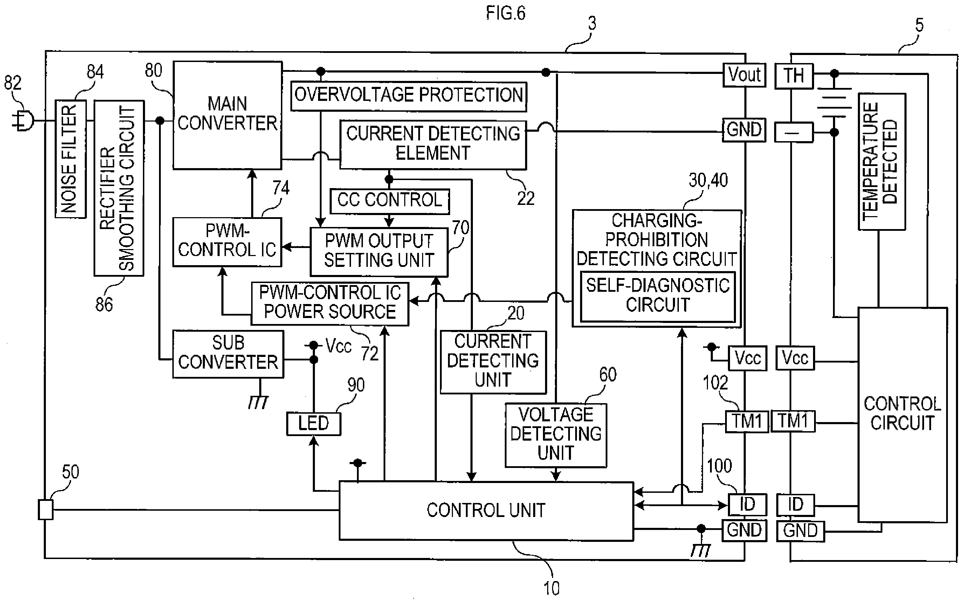

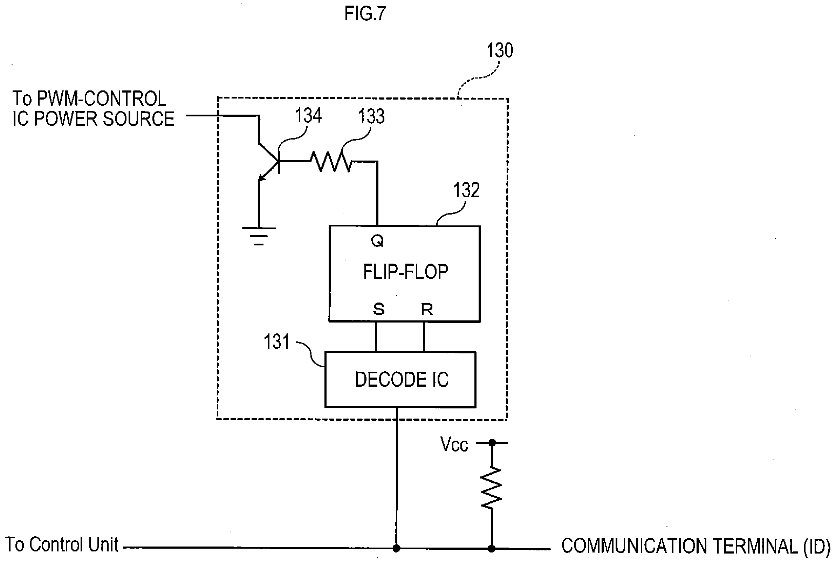

A third embodiment of the present invention will be described next with reference to FIG. 6 and FIG. 7. In the third embodiment, a charging-prohibition detecting circuit 30 is configured integrally with a self-diagnostic circuit 40 in a charging apparatus 1 of the first embodiment.

FIG. 6 is a circuit diagram schematically illustrating a circuit configuration of a charging apparatus according to the third embodiment. FIG. 7 is a circuit diagram illustrating the charging-prohibition detecting circuit 30 and the self-diagnostic circuit 40 when digital data from the battery 5 is used as the information indicating the charging status of the battery 5 according to the third embodiment.

The configuration of the charging apparatus 3 of the third embodiment is similar to the configuration of the charging apparatus 1 of the first embodiment. Therefore, identical reference numerals will be used for identical components, and the explanation thereof will be omitted.

As illustrated in FIG. 6, the charging apparatus 3 has a circuit configuration in which the charging-prohibition detecting circuit 30 is integrated with the self-diagnostic circuit 40, and the information indicating the status of the battery 5 is entered from the battery 5 to the charging-prohibition detecting circuit 30 and the control unit 10.

Here, the information indicating the status of the battery 5 may be, for example, a digital value, such as a temperature or charging voltage of the battery 5 indicating the charging status of the battery 5, a digital data indicating whether the battery 5 is normal or abnormal, or the like.

As illustrated in FIG. 7, the charging-prohibition detecting circuit 30 includes: a decode IC 131; a flip-flop 132; a resistor 133, and a transistor 134. The decode IC 131 is inputted with information indicating the status of the battery 5 (digital data) via a communication terminal 100 from the battery 5.

The decode IC 131 decodes the digital data inputted from the battery 5 and outputs to the flip-flop 132 as S (set) and R (reset) signals.

For example, when the battery 5 is at a chargeable status, the decode IC 131 receives a charging information from the battery 5 and outputs a Lo level signal and a Hi level signal to an S terminal and an R terminal of the flip-flop 132, respectively. Once the battery 5 reaches the full-charge status, the decode IC 131 receives a charging discontinuing information from the battery 5 and outputs a Hi level signal and a Lo level signal to the S terminal and the R terminal of the flip-flop 132, respectively.

The flip-flop 132 is a so-called RS flip-flop and has the R terminal and the S terminal as its input terminals and a Q terminal as its output terminal.

When the S terminal is inputted with a Hi level signal and the R terminal is inputted with a Lo level signal, the Q terminal outputs the Hi level signal. When the S terminal is inputted with the Lo level signal and the R terminal is inputted with the Hi level signal, the Q terminal outputs the Lo level signal.

The transistor 134 is a bipolar NPN type transistor and is configured with a base connected to the Q terminal of the flip-flop 132 via the resistor 133, a collector connected to the PWM-control IC power source 72, and an emitter connected to the ground.

When the control unit 10 inputs, to the decode IC 131, digital data representing charging discontinuing, the S terminal of the flip-flop 132 receives, from the decode IC 131, a Hi level signal and the R terminal thereof receives a Lo level signal, wherein the Q terminal outputs the Hi level signal.

In this case, the transistor 134 is inputted, at its base, with the Hi level signal and then becomes in an ON state. That is, the collector and the emitter are electrically connected to each other, and the PWM-control IC power source 72 stops outputting power. That is, the PWM-control IC power source is turned off and charging the battery 5 is prohibited.

To the contrary, when the control unit 10 inputs, to the decode IC 131, digital data representing charging, the S terminal of the flip-flop 132 receives, from the decode IC 131, a Lo level signal and the R terminal thereof receives, from the decode IC 131, a Hi level signal, wherein the Q terminal outputs the Lo level signal.

In this case, the transistor 134 is inputted, at its base, with the Lo level signal and then becomes in an OFF state. That is, the collector and the emitter are electrically disconnected from each other, the PWM-control IC power source 72 outputs power. That is, the PWM-control IC is supplied with power and charging the battery 5 is performed.

### (Operation of the charging apparatus 3)

The operation of the charging apparatus 3 is the same as the one of the charging apparatus 1 of the first embodiment.

### (Characteristics of the charging apparatus 3)

In the above-described charging apparatus 3, digital data is employed as the information indicating the status of the battery 5. Such digital data indicates permission to or prohibition of charging the battery 5. The predetermined first condition and predetermined second condition are both referred to as digital data that represents discontinuing charging the battery 5.

Therefore, charging control and self-diagnosis can be performed based upon the information indicating whether the battery 5 is normal or abnormal besides the usage, as digital data, of temperature or charging voltage indicating the charging status of the battery 5.

As described above, in addition to temperature or charging voltage of the battery 5, the battery charging is not started in the event where the battery 5 is abnormal, such as failure, thereby enabling to reliably protect the charging apparatus 3.

### [Other Embodiments]

The present invention should not be construed as limited to the embodiments set forth above and can be achieved in any modes within the scope of the present invention.
(1) According to the above embodiments, the self diagnosis for the charging apparatus 1, 2, and 3 is performed when starting charging. However, the self diagnosis may be performed in the process of charging the battery 5. For example, the processes from S110 to S155 are performed at a predetermined time interval following a different task from the self-diagnostic process.
(2) According to the above embodiments, the difference in colors of lights emitted by the LED 90 notifies whether the charging apparatus 1 is normal or abnormal. However, an error notification may be performed acoustically, such as by buzzer or by sound, instead of the LED 90. Further, the error notification may be performed in combination of the LED 90 and the acoustic manner.
(3) According to the above embodiments, the charging-prohibition detecting circuit 30 is configured with the comparators 31 and 32 or with the transistor 134 and the flip-flop 132. However, the charging-prohibition detecting circuit 30 may be configured in any way as long as the charging-prohibition detecting circuit 30 can receive, from the control unit 10, a signal or digital data satisfying the predetermined second condition and can turn on and off the PWM-control IC power source 72. For example, the charging-prohibition detecting circuit 30 may be configured with a relay or an electronic type switch.
(4) According to the above embodiments, as illustrated in FIGS. 2 and 5, the comparator 32 includes a function to invert the output of the comparator 31, therefore the comparator 32 may be replaced by an FET or the like.
(5) According to the above embodiments, the control unit 10 performs a determination on the presence of insertion of the battery 5 and on charging permission. However, for the purpose of cutting consumption of standby electricity, a charging-start switch 50 may be additionally provided as illustrated in FIG. 1, which serves as a trigger for an initiation of battery charging.
(6) According to the above embodiments, battery charging is prohibited by stopping the PWM-control IC power source by the charging-prohibition detecting circuit 30. Alternatively, battery charging may be prohibited by turning off a switch additionally disposed between the main converter 80 and the battery 5.
(7) According to the above embodiments, the self-diagnostic circuit 40 is connected in parallel to information from the battery, such as temperature, and the operation of the charging-prohibition detecting circuit 30 is confirmed. In addition to this, the operation of the charging-prohibition detecting circuit 30 may be confirmed, for example, by disconnecting the information from the battery from the charging-prohibition detecting circuit 30 and by connecting only the self-diagnostic circuit 40 to the charging-prohibition detecting circuit 30.
(8) According to the above embodiments, the self-diagnostic circuit 40 is provided separately from the control unit 10. However, a circuit configuration may be made, in which the self-diagnostic circuit 40 is included in the control unit 10.

## Claims

1. A charging apparatus (1) for charging a battery for an electric power tool, the charging apparatus comprising:
a control unit (10) adapted to obtain information indicating a status of the battery from the battery and to control permitting or prohibiting charging the battery depending on whether or not the obtained information satisfies a predetermined first condition;
a charging detecting unit (20, 22) adapted to detect whether or not the battery is being charged;
a charging discontinuing unit (30) adapted to obtain the information indicating the status of the battery from the battery and adapted to discontinue charging the battery independently of the control by the control unit to permit or prohibit charging when the obtained information satisfies a predetermined second condition; **characterized in**
a diagnosing unit (40) adapted to input diagnostic information satisfying the second condition to the charging discontinuing unit in addition to the information indicating the status of the battery or as a replacement for the information indicating the status of the battery based upon information entered from the control unit,
wherein the control unit is adapted to perform a self-diagnostic process in which the control unit discontinues charging the battery via the charging discontinuing unit by outputting the diagnostic information satisfying the second condition to the diagnosing unit while permitting charging the battery, subsequently the control unit obtains from the charging detecting unit whether or not the battery is being charged, and the control unit initiates charging the battery by stopping outputting the diagnostic information satisfying the second condition to the diagnosing unit when the battery is not being charged and prohibits charging the battery when the battery is being charged.

2. A charging apparatus according to claim 1,
wherein the information indicating the status of the battery is a temperature of the battery, the predetermined first condition is an upper limit value of a temperature at which the battery is chargeable, and the predetermined second condition is a temperature higher than a temperature obtained by adding a specified value to the upper limit value of the temperature at which the battery is chargeable.

3. A charging apparatus according to claim 1,
wherein the information indicating the status of the battery is a charging voltage for the battery, the predetermined first condition is an upper limit value of a charging voltage at which the battery is chargeable, and the predetermined second condition is a voltage higher than a voltage obtained by adding a specified value to the upper limit value of the charging voltage at which the battery is chargeable.

4. A charging apparatus according to claim 1,
wherein the information indicating the status of the battery is digital data indicating either permission or prohibition of charging the battery, and the predetermined first condition and the predetermined second condition are both digital data indicating discontinuing charging the battery.

5. A charging apparatus according to any one of claims 1-4, further comprising:
a battery-insert detecting unit that is adapted to detect an insertion of the battery,
wherein the control unit is adapted to perform the self-diagnostic process after detecting the insertion of the battery by the battery-insert detecting unit and prior to initiating charging the battery.

6. A charging apparatus according to any one of claims 1-4, further comprising:
a battery-insert detecting unit that is adapted to detect an insertion of the battery,
wherein the control unit is adapted to perform the self-diagnostic process when a predetermined self-diagnosis starting condition is satisfied after detecting the insertion of the battery by the battery-insert detecting unit and after initiating charging.

7. A charging apparatus according to any one of claims 1-6,
wherein the control unit is adapted to initiate charging the battery by stopping the diagnostic information satisfying the second condition to the diagnosing unit and to output, to the external, information indicating that the charging discontinuing unit is normal when the charging detecting unit detects the absence of charging the battery, and the control unit is adapted to prohibit charging the battery and to output, to the external, information indicating that the charging discontinuing unit is abnormal when the charging detecting unit detects the presence of charging the battery.

## Patentansprüche

1. Ladegerät (1) zum Laden einer Batterie für ein elektrisches Kraftwerkzeug, wobei das Ladegerät
eine Steuerungseinheit (10), die dazu angepasst ist, Information, die einen Status der Batterie anzeigt, von der Batterie zu erhalten und das Ermöglichen oder Verhindern des Ladens der Batterie abhängig davon zu steuern, ob die erhaltene Information eine vorbestimmte erste Bedingung erfüllt oder nicht,
eine Ladeerfassungseinheit (20, 22), die dazu angepasst ist, zu erfassen, ob die Batterie geladen wird oder nicht,
eine Ladeunterbrechungseinheit aufweist, die dazu angepasst ist, die Information, die den Status der Batterie anzeigt, von der Batterie zu erhalten, und dazu angepasst ist, das Laden der Batterie zu unterbrechen, unabhängig von der Steuerung durch die Steuerungseinheit zum Ermöglichen oder Verhindern des Ladens, wenn die erhaltene Information eine vorbestimmte zweite Bedingung erfüllt, **gekennzeichnet durch**
eine Diagnoseeinheit, die dazu angepasst ist, Diagnoseinformation, die die zweite Bedingung erfüllt, der Ladeunterbrechungseinheit einzugeben, zusätzlich zu der Information, die den Status der Batterie anzeigt, oder als Ersatz für die Information, die den Status der Batterie anzeigt, basierend auf Information, die von der Steuerungseinheit eingegeben wird,
bei dem die Steuerungseinheit dazu angepasst ist, einen Selbstdiagnoseprozess durchzuführen, in welchem die Steuerungseinheit das Laden der Batterie über die Ladeunterbrechungseinheit **durch** Ausgabe der Diagnoseinformation an die Diagnoseeinheit unterbricht, die die zweite Bedingung erfüllt, während das Laden der Batterie ermöglicht ist, nachfolgend die Steuerungseinheit von der Ladeerfassungseinheit erhält, ob die Batterie geladen wird oder nicht, und die Steuerungseinheit das Laden der Batterie **durch** Anhalten der Ausgabe der Diagnoseinformation, die die zweite Bedingung erfüllt, an die Diagnoseeinheit beginnt, wenn die Batterie nicht geladen wird, und das Laden der Batterie verhindert, wenn die Batterie geladen wird.

2. Ladegerät nach Anspruch 1, bei der die Information, die den Status der Batterie anzeigt, eine Temperatur der Batterie ist, die vorbestimmte erste Bedingung ein oberer Grenzwert einer Temperatur ist, bei welchem die Batterie ladbar ist, und die vorbestimmte zweite Bedingung eine höhere Temperatur als eine Temperatur ist, die durch Hinzufügen eines spezifischen Wertes zu dem oberen Grenzwert der Temperatur, an welchem die Batterie ladbar ist, erhalten wird.

3. Ladegerät nach Anspruch 1, bei dem die Information, die den Status der Batterie anzeigt, eine Ladespannung der Batterie ist, die vorbestimmte erste Bedingung einer oberer Grenzwert einer Ladespannung ist, bei welchem die Batterie ladbar ist, ist, und die vorbestimmte zweite Bedingung eine höhere Spannung als eine Spannung ist, die durch Hinzufügen eines spezifischen Wertes zu dem oberen Grenzwert der Ladespannung, bei welchem die Batterie ladbar ist, erhalten wird.

4. Ladegerät nach Anspruch 1, bei dem die Information, die den Status der Batterie anzeigt, digitale Daten sind, die entweder das Ermöglichen oder das Verhindern des Ladens anzeigen, und die vorbestimmte erste Bedingung und die vorbestimmte zweite Bedingung beides digitale Daten sind, die das Unterbrechen des Ladens der Batterie anzeigen.

5. Ladegerät nach einem der Ansprüche 1 bis 4, das weiter
eine Batterieeinführungserfassungseinheit aufweist, die dazu angepasst ist, ein Einführen der Batterie zu erfassen,
bei der die Steuerungseinheit dazu angepasst ist, den Selbstdiagnoseprozess nach Erfassen der Einführung der Batterie durch die Batterieeinführungserfassungseinheit und vor dem Beginn des Ladens der Batterie auszuführen.

6. Ladegerät nach einem der Ansprüche 1 bis 4, das weiter eine Batterieeinführungserfassungseinheit aufweist, die dazu angepasst ist, ein Einführen der Batterie zu erfassen,
bei der die Steuerungseinheit dazu angepasst ist, den Selbstdiagnoseprozess auszuführen, wenn eine vorbestimmte Selbstdiagnosestartbedingung nach Erfassen der Einführung der Batterie durch die Batterieeinführungserfassungseinheit und nach Beginn des Ladens erfüllt ist.

7. Ladegerät nach einem der Ansprüche 1 bis 6, bei dem die Steuerungseinheit dazu angepasst ist, das Laden der Batterie durch Anhalten der Diagnoseinformation, die die zweite Bedingung erfüllt, an die Diagnoseeinheit zu beginnen, und dazu angepasst ist, extern Information, die anzeigt, dass die Ladeunterbrechungseinheit normal ist, auszugeben, wenn die Ladeerfassungseinheit das Nichtvorhandensein des Ladens der Batterie erfasst, und die Steuerungseinheit dazu angepasst ist, das Laden der Batterie zu verhindern und extern Information, die anzeigt, dass die Ladeunterbrechungseinheit abnormal ist, auszugeben, wenn die Ladeerfassungseinheit das Vorliegen des Ladens der Batterie erfasst.

## Revendications

1. Dispositif de recharge (1) permettant de recharger la batterie d'un outil électrique, le dispositif de recharge comprenant :
une unité de commande (10) conçue pour obtenir de la batterie une information indiquant l'état de la batterie et pour décider d'autoriser ou d'interdire la charge de la batterie selon que l'information obtenue satisfait ou non une première condition prédéterminée ;
une unité de détection de charge (20, 22) conçue pour détecter si la batterie est ou non en cours de charge ;
une unité d'arrêt de charge (30) conçue pour obtenir de la batterie l'information indiquant l'état de la batterie et conçue pour arrêter la charge de la batterie indépendamment de la décision de l'unité de commande d'autoriser ou d'interdire la charge lorsque l'information obtenue satisfait une seconde condition prédéterminée ;
**caractérisé en ce qu'**il comprend
une unité de diagnostic (40) conçue pour entrer une information de diagnostic satisfaisant la seconde condition dans l'unité d'arrêt de charge en complément de l'information indiquant l'état de la batterie ou à la place de l'information indiquant l'état de la batterie en fonction de l'information entrée par l'unité de commande,
dans lequel l'unité de commande est conçue pour procéder à un autodiagnostic dans lequel l'unité de commande arrête la charge de la batterie via l'unité d'arrêt de charge en transmettant l'information de diagnostic satisfaisant la seconde condition à l'unité de diagnostic tout en autorisant la charge de la batterie, l'unité de commande sachant ensuite par l'unité de détection de charge si la batterie est ou non en cours de charge, et l'unité de commande lance la charge de la batterie en cessant de transmettre l'information de diagnostic satisfaisant la seconde condition à l'unité de diagnostic lorsque la batterie n'est pas en charge et interdit la charge de la batterie lorsque la batterie est en charge.

2. Dispositif de recharge selon la revendication 1, dans lequel l'information indiquant l'état de la batterie est une température de la batterie, la première condition prédéterminée est une valeur limite supérieure d'une température à laquelle la batterie peut être rechargée, et la seconde condition prédéterminée est une température supérieure à une température obtenue en ajoutant une valeur donnée à la valeur limite supérieure de la température à laquelle la batterie peut être rechargée.

3. Dispositif de recharge selon la revendication 1, dans lequel l'information indiquant l'état de la batterie est une tension de charge de la batterie, la première condition prédéterminée est une valeur limite supérieure d'une tension de charge à laquelle la batterie peut être rechargée, et la seconde condition prédéterminée est une tension supérieure à une tension obtenue en ajoutant une valeur donnée à la valeur limite supérieure de la tension de charge à laquelle la batterie peut être rechargée.

4. Dispositif de recharge selon la revendication 1, dans lequel l'information indiquant l'état de la batterie est une donnée numérique indiquant l'autorisation ou l'interdiction de la charge de la batterie, et la première condition prédéterminée et la seconde condition prédéterminée sont chacune une donnée numérique indiquant l'arrêt de la charge de la batterie.

5. Dispositif de recharge selon l'une quelconque des revendications 1 à 4, comprenant en outre :
une unité de détection d'insertion de la batterie conçue pour détecter une insertion de la batterie,
dans lequel l'unité de commande est conçue pour procéder à l'autodiagnostic après détection de l'insertion de la batterie par l'unité de détection d'insertion de la batterie et avant le lancement de la charge de la batterie.

6. Dispositif de recharge selon l'une quelconque des revendications 1 à 4, comprenant en outré
une unité de détection d'insertion de la batterie conçue pour détecter une insertion de la batterie,
dans lequel l'unité de commande est conçue pour procéder à l'autodiagnostic lorsqu'une condition prédéterminée de démarrage de l'autodiagnostic est satisfaite après détection de l'insertion de la batterie par l'unité de détection d'insertion de la batterie et après le lancement de la charge.

7. Dispositif de recharge selon l'une quelconque des revendications 1 à 6,
dans lequel l'unité de commande est conçue pour lancer la charge de la batterie en cessant de transmettre l'information de diagnostic satisfaisant la seconde condition à l'unité de diagnostic et pour transmettre, à l'extérieur, une information indiquant que l'unité d'arrêt de charge est normale lorsque l'unité de détection de charge détecte l'absence de charge de la batterie, et l'unité de commande est conçue pour interdire la charge de la batterie et pour transmettre, à l'extérieur, une information indiquant que l'unité d'arrêt de charge est en anomalie lorsque l'unité de détection de charge détecte la présence d'une charge de la batterie.
